# EUROPEAN PATENT APPLICATION

(11) **EP 0 887 292 A1**
(43) Date of publication of application: **30.12.1998**
(21) Application number: 98500107.2
(22) Date of filing: 30.04.1998
(51) Int. Cl.: B65G 47/51

(54) **Device for intermediate storage and supply of pieces of fruit to fruit packaging machines and the like**

(30) Priority: 09.06.1997 ES 9701257
(71) Applicant: Paniagua Olaechea, Rosalina, E-46600 Alzira (Valencia) (ES)
(72) Inventor: Paniagua Olaechea, Rosalina, E-46600 Alzira (Valencia) (ES)
(74) Representative: Duran Moya, Carlos

(57) **Abstract**

The device comprises a trough (1) to receive the pieces of fruit in an intermediate location, in which both the base wall (3) and the lateral walls (4) are motorised in a synchronous manner, receiving the supply of fruit from a supply belt (6) which is disposed at the level corresponding to the high part of the storage trough, and is fitted on a frame (9) which can be displaced on straight guides (10) parallel to the belt of the base or bottom of the container tank, with a deflector (14) associated which thrusts the fruit deposited in the interior of the trough at the end of the displaceable frame which supports the upper belt, the displacement of this deflector being independent of the displacement of the belt of the base which constitutes the base of the intermediate storage tank.

## Description

The present invention relates to a device for storage in an intermediate position of pieces of fruit which are to be supplied to machines which carry out packaging of the pieces of fruit or the like, such as fruit and vegetables, in boxes suitable for dispatch.

At present very simple devices are known for this function, comprising an intermediate supply tank or trough for pieces of fruit which are conveyed by an intake conveyor belt, and which tank or trough supplies the pieces of fruit via a conveyor belt which constitutes the base, and via two other conveyors integral with the latter which constitute the sides of the tank or trough, as far as the packaging machine, the rearward movement of the conveyors resulting in accumulation and the forward movement resulting in supply. However, this type of intermediate storage device has an excessively simple structure which does not make it possible to obtain satisfactory functionality. In fact, owing to the structure of the intermediate storage devices known at present, it frequently happens that if the intermediate storage space for pieces of fruit or horticultural products disposed in the tank or trough of the device is not emptied completely, which depends on the speeds of output of the fruit in relation to the speed of supply to the intermediate tank or trough, the pieces of fruit deposited first can be left in the intermediate storage for an excessively long period of time. In some cases this period of storage time can be a few days, which is not suitable for guaranteeing the quality of the pieces of fruit, vegetables or the like which are to be packed (fresh, perishable items).

The device which is the object of the present invention is in fact designed to solve this problem, by providing means for carrying out satisfactory replacement of the pieces of fruit disposed in the intermediate storage, and which in general can also guarantee gentle, appropriate treatment of the pieces of fruit throughout the process of receipt of the latter, storage, and subsequent supply to the packaging machine.

The device which is the subject of the present invention is also designed to provide means for checking the levels in different areas of the device, which, when duly integrated in a microcomputer associated with the device, permits efficient control of any fruit input and output rate.

In order to achieve these objectives, the device which is the subject of the present invention comprises an intermediate storage tank or trough in which both the base and the lateral walls consist of synchronised, motorised conveyor belts, and fruit is supplied or admitted by means of a upper conveyor belt which is mounted on a displaceable frame which supports a plate to convey the fruit deposited in the tank or trough, which plate is associated with the support frame of the upper conveyor belt, and slides by means of wheels on the lower conveyor belt and its sides.

Level detectors which are provided on a support which is integral with the support frame of the upper, supply conveyor belt, make it possible to check the programmed level of the product in its various paths, enabling the microcomputer which controls the functioning of the device to command the most appropriate manoeuvres in each case.

In order to assist understanding, there is attached by way of explanatory but non-limiting example, a drawing which comprises a schematic view in longitudinal cross-section of an intermediate storage device for fruit, according to the present invention.

In this figure it can be seen that the tank or hopper 1 which is designed for intermediate storage of pieces of fruit 2, consists of the motorised conveyor belt 3 of the base and lateral walls, which are disposed symmetrically one on each side of the belt 3 of the base, for the sake of clarity only one of these belts, indicated by the number 4, being represented. The lateral conveyor belts are also motorised and synchronised with the belt 3 of the base, such that when movement of the belt of the base takes place in order to supply pieces of fruit 2 to the hopper 5 of a packaging machine not shown, there is simultaneous movement of the belts which constitute the base and lateral walls of the tank or trough 1, always and only in the direction of advance of the fruit, and never in reverse.

The pieces of fruit 2 are supplied by means of an upper conveyor belt 6, which in turn receives the fruit from another, supply conveyor belt 7.

The conveyor belt 6 is connected to a frame 9, which is represented only schematically, and slides through guides 10 which are parallel to the tank or trough 1.

The frame 9 can be displaced longitudinally along the guides 10 by means of any device of a conventional type, such as a pinion 11 and rack 12 mechanism, the pinion 11 being activated by an independent motor 13.

The frame 9 which supports the conveyor belt 6 incorporates the deflector 14 which thrusts the pieces of fruit 2 independently onto the belt 3 of the base, and drives the sides 4, on which it can be made to roll by means of small wheels such as 15 and 16. The aforementioned deflector 14 is associated with the frame 9 by means which are not shown in detail, which permit association of the longitudinal displacements of the deflector with those of the frame 9.

The supply of pieces of fruit 2 to the hopper 5 involves passage via a flexible plate 17, which is forced to bend in order to permit passage of the pieces of fruit or vegetables 18, which are conveyed by another conveyor belt 8, the linear speed of which is slightly faster than that of the belt 3, and which, together with the flexible plate 17, has the purpose of rolling the fruit so that it can be introduced into the hopper 5.

The manoeuvres of the device are controlled by means of multiple level detectors such as 20 and 21, which are illustrated by way of example, to check for the existence of fruit in the initial area of the conveyor belt 3, and in the final area of the latter and in the hopper 5. However, the number of detector devices can vary widely according to the control functions required.

The detector 20 is mounted on a support which is integral with the frame of the upper supply conveyor belt, in order to provide the microprocessor at all times with information concerning the level of filling; this detector is always moved together with the deflector 14 and in turn, with the frame 9.

The detector 21 provides information on the maximum filling level of the hopper 5, and the ends of travel 19 and 19' delimit the advance and return path.

It will be appreciated that the composition of the device for intermediate storage and supply of pieces of fruit and the like, which is the subject of the present invention, enables the device to treat the fruit gently and without sudden stresses, and simultaneously makes it possible to obtain integrated control of the activation of the various conveyor belts, in order to permit correct supply of fruit to the packaging machine, and to prevent storage of the pieces of fruit for an excessively long period of time.

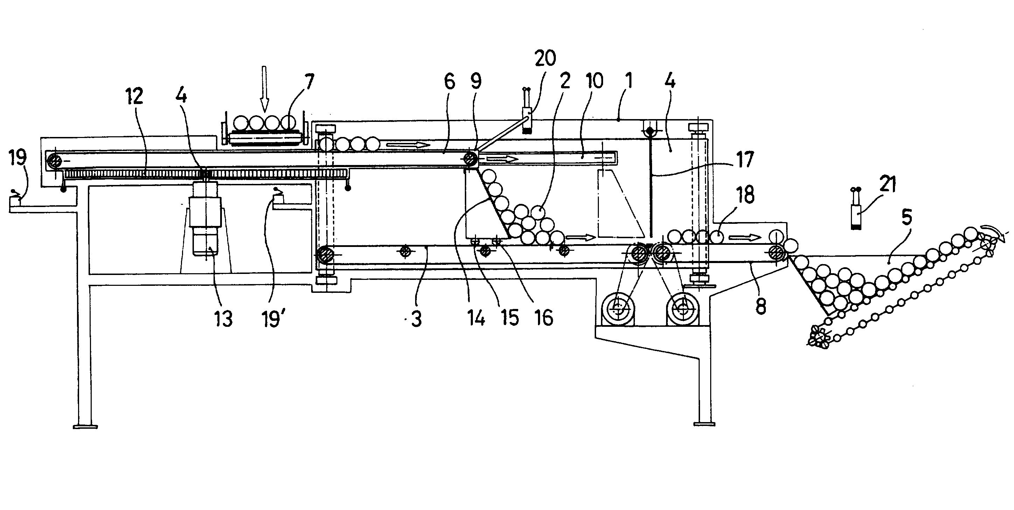

## Claims

1. Device for intermediate storage and supply of pieces of fruit to packaging machines for fruit and the like, characterised in that it comprises a trough to receive the pieces of fruit in an intermediate location, in which both the base wall and the lateral walls are motorised in a synchronous manner and always move in the direction of advance of the fruit, receiving the supply of fruit from a supply belt which is disposed at the level corresponding to the high part of the storage trough and is fitted on a frame which can be displaced on straight guides parallel to the belt of the base or bottom of the container tank, with a deflector associated which thrusts the fruit deposited in the interior of the trough at the end of the displaceable frame which supports the upper belt, the displacement of this deflector being independent of the displacement of the belt of the base and the lateral belts which partially constitute the intermediate storage tank.

2. Device according to claim 1, for intermediate storage and supply of pieces of fruit to packaging machines for fruit and the like, characterised in that the frame which supports the upper conveyor belt can be displaced longitudinally by being slid on the straight guides by means of a rack and pinion assembly which is motorised autonomously.

3. Device according to claim 1, for intermediate storage and supply of pieces of fruit to packaging machines for fruit and the like, characterised in that the deflector which thrusts the fruit and is associated with the mobile frame, can be slid on the base conveyor belt of the trough by means of a system of wheels which can be displaced on this belt, and the lateral belts.

4. Device according to the preceding claims, for intermediate storage and supply of pieces of fruit to packaging machines for fruit and the like, characterised by the existence of fruit level detectors, at least on a support which is integral with the front part of the frame which supports the upper supply conveyor belt, on the output part of this conveyor belt, and on the supply hopper of the packaging machine.
